(19) Europäisches Patentamt
European Patent Office
Office européen des brevets

(11) **EP 3 649 033 B1**

(12) **EUROPÄISCHE PATENTSCHRIFT**

(45) Veröffentlichungstag und Bekanntmachung des Hinweises auf die Patenterteilung:
**19.10.2022   Patentblatt 2022/42**

(21) Anmeldenummer: **18753083.7**

(22) Anmeldetag: **26.07.2018**

(51) Internationale Patentklassifikation (IPC):
**B61L 15/00** (2006.01)     **B61L 27/40** (2022.01)
**B61L 27/53** (2022.01)     **B61L 27/57** (2022.01)
**G05B 23/02** (2006.01)

(52) Gemeinsame Patentklassifikation (CPC):
**B61L 15/0081; B61L 15/0072; B61L 27/40;**
**B61L 27/53; B61L 27/57; G05B 23/0235;**
G05B 23/0237

(86) Internationale Anmeldenummer:
**PCT/EP2018/070319**

(87) Internationale Veröffentlichungsnummer:
**WO 2019/042671 (07.03.2019 Gazette 2019/10)**

(54) **VERFAHREN ZUR UNTERSUCHUNG EINES FUNKTIONSVERHALTENS EINER KOMPONENTE EINER TECHNISCHEN ANLAGE, COMPUTERPROGRAMM UND COMPUTERLESBARES SPEICHERMEDIUM**

METHOD FOR INVESTIGATING A FUNCTIONAL BEHAVIOUR OF A COMPONENT OF A TECHNICAL INSTALLATION, COMPUTER PROGRAM, AND COMPUTER-READABLE STORAGE MEDIUM

PROCÉDÉ POUR L'ANALYSE D'UN COMPORTEMENT FONCTIONNEL D'UN COMPOSANT D'UNE INSTALLATION TECHNIQUE, PROGRAMME INFORMATIQUE ET SUPPORT D'ENREGISTREMENT LISIBLE PAR ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.09.2017   DE 102017215341**

(43) Veröffentlichungstag der Anmeldung:
**13.05.2020   Patentblatt 2020/20**

(73) Patentinhaber: **Siemens Mobility GmbH**
**81739 München (DE)**

(72) Erfinder:
• **KLINGEBIEL, Dennis**
**Atlanta, GA 30308 (US)**
• **FANKHAUSER, Martin**
**81667 München (DE)**
• **MÜLLER, Thomas**
**90552 Röthenbach/Pegnitz (DE)**

(56) Entgegenhaltungen:
EP-A1- 1 542 108     WO-A1-2016/191711
DE-A1-102005 053 648     DE-A1-102006 019 896

**Beschreibung**

Verfahren zur Untersuchung eines Funktionsverhaltens einer Komponente einer technischen Anlage, Computerprogramm und computerlesbares Speichermedium

Die Erfindung betrifft ein Verfahren zur Untersuchung eines Funktionsverhaltens einer Komponente einer technischen Anlage.

Es ist bekannt, dass für einen Komponententyp diejenigen Komponenten, welche ein unübliches bzw. anormales Verhalten zeigen, als nicht funktionsfähig erkannt bzw. identifiziert werden können. Dabei wird beispielsweise ein aktueller Betriebsparameterwert einer zu untersuchenden Komponente mit einem festen Schwellwert verglichen. Ist beispielsweise der Betriebsparameterwert der zu untersuchenden Komponente größer als der feste Schwellwert, wird erkannt, dass die zu untersuchende Komponente ein anormales Verhalten zeigt. Eine Festlegung, welcher Schwellwert zu verwenden ist, ist schwierig und mit großen Unsicherheiten behaftet. Oft werden die Schwellwerte anhand von Erfahrungswerten oder willkürlich festgelegt. Externe Einflüsse wie Umgebungsbedingungen (z.B. Umgebungstemperatur, Luftfeuchtigkeit etc.) und/oder anlagenabhängige Einflüsse (z.B. Laufleistung der Anlage, Betriebstemperaturen umgebender Komponenten etc.) bleiben dabei weitestgehend unberücksichtigt.

So lehren beispielsweise die Druckschriften DE 199 61 631 A1, DE 37 34 487 A1, DE 197 32 046 A1 und EP 1 542 108 A1 verschiedene Verfahren zur Überwachung einer Komponente einer technischen Anlage bei welchen ein das Funktionsverhalten der Komponente repräsentierendes Signal der zu untersuchenden Komponente mit einem vorgegebenen Referenzsignal verglichen wird.

Die Offenlegungsschrift WO 2016/191711 A1 offenbart ein Verfahren gemäß dem Oberbegriff des unabhängigen Patentanspruchs 1.

Eine Aufgabe der Erfindung ist es, ein verbessertes, genaueres Verfahren zur Untersuchung eines Funktionsverhaltens einer Komponente einer technischen Anlage anzugeben.

Die Aufgabe wird gelöst durch ein Verfahren zur Untersuchung eines Funktionsverhaltens einer Komponente einer technischen Anlage gemäß Anspruch 1, bei dem erfindungsgemäß ein das Funktionsverhalten der Komponente repräsentierendes Signal der Komponente mit einem Referenzsignal, welches ein durchschnittliches Funktionsverhalten gleichartiger Komponenten beschreibt, verglichen wird. Erfindungsgemäß wird bei dem Vergleich eine die Abweichung des Signals vom Referenzsignal beschreibende Vergleichsgröße ermittelt. Das heißt, dass die Vergleichsgröße vorzugsweise die Abweichung des Signals der zu untersuchenden Komponente vom Referenzsignal beschreibt. Weiter wird eine Auftretenswahrscheinlichkeit der Vergleichsgröße unter Verwendung einer vorgebbaren Verteilung einer Vielzahl solcher Vergleichsgrößen ermittelt.

Die Vergleichsgröße ist eine maximale kumulierte Abweichung zwischen dem Signal der zu untersuchenden Komponente und dem Referenzsignal.

Zweckmäßigerweise wird anhand der Auftretenswahrscheinlichkeit der Vergleichsgröße das Funktionsverhalten beurteilt. Die Auftretenswahrscheinlichkeit der Vergleichsgröße ist vorzugsweise ein Maß für das Funktionsverhalten der zu untersuchenden Komponente, insbesondere ein Maß dafür, ob sich die zu untersuchende Komponente normal verhält, insbesondere ob die zu untersuchende Komponente funktionsfähig ist.

Die Auftretenswahrscheinlichkeit der Vergleichsgröße ist zweckmäßigerweise von der Vielzahl solcher Vergleichsgrößen abhängig, anhand welcher insbesondere die vorgebbare Verteilung ermittelt wird. Die Vielzahl solcher Vergleichsgrößen kann, insbesondere regelmäßig, aktualisiert werden. Auf diese Weise kann das Funktionsverhalten der zu untersuchenden Komponente unter Verwendung eines dynamischen Kriteriums, nämlich der Auftretenswahrscheinlichkeit, geprüft und/oder beurteilt werden.

Weiter ist ein Vorteil des erfindungsgemäßen Verfahrens seine hohe Sensitivität. Das heißt, dass bereits kleine Abweichungen des Signals der zu untersuchenden Komponente vom Referenzsignal erkannt werden können.

Das Signal der zu untersuchenden Komponente kann ein unbehandeltes Signal sein. Weiter kann das Signal der zu untersuchenden Komponente ein nachbehandeltes Signal sein. Insbesondere kann das Signal der zu untersuchenden Komponente gefiltert und/oder geglättet sein. Ferner kann das Signal der zu untersuchenden Komponente ein Mittelwert mehrerer Signale und/oder eine Faltung mehrerer Signale sein.

Das Signal der zu untersuchenden Komponente kann mehrere Betriebsparameterwerte, insbesondere in Abhängigkeit von der Zeit, umfassen. Weiter kann das Referenzsignal mehrere Referenzwerte, insbesondere in Abhängigkeit von der Zeit, umfassen.

Das Signal der zu untersuchenden Komponenten und/oder das Referenzsignal kann/können geglättet sein. Weiter kann/können das Signal der zu untersuchenden Komponente und/oder das Referenzsignal normiert sein/werden. Insbesondere können die Betriebsparameterwerte des Signals, kurz die Betriebsparameterwerte, und/oder die Referenzwerte des Referenzsignals, kurz die Referenzwerte, normiert sein/werden.

Es ist vorteilhaft, wenn die Betriebsparameterwerte über die Zeit kumuliert werden. Weiter ist es bevorzugt, wenn die Referenzwerte über die Zeit kumuliert werden. Vorzugsweise wird eine Abweichung, auch kumulative Abweichung, zwischen den kumulierten Betriebsparameterwerten und den kumulierten Referenzwerten in Abhängigkeit der Zeit berechnet.

Zweckmäßigerweise wird als Vergleichsgröße eine maximale kumulative Abweichung, auch maximale kumulative Distanz, zwischen den kumulierten Betriebsparameterwerten und den kumulierten Referenzwerten ermittelt. Die maximale kumulative Abweichung entspricht zweckmäßigerweise dem Maximum der zuvor genannten Abweichung zwischen den kumulierten Betriebsparameterwerten und den kumulierten Referenzwerten.

Ein Betriebsparameter kann beispielsweise eine Temperatur, ein Vibrationsparameter, eine Lautstärke, eine Spannung, ein elektrischer Strom, eine verbrauchte/umgewandelte Leistung, eine Umdrehungsfrequenz oder Ähnliches sein. Weiter kann der Betriebsparameter ein sich aus mehreren Parametern ermittelbarer Betriebsparameter sein.

Zweckmäßigerweise sind die Betriebsparameterwerte und/oder die Referenzwerte von der Zeit abhängig. Auf diese Weise kann/können das Signal der zu untersuchenden Komponente und/oder das Referenzsignal von der Zeit anhängig sein.

Beispielsweise können die Betriebsparameterwerte und/oder die Referenzwerte direkt in Abhängigkeit der Zeit ermittelt werden/worden sein. Weiter können die Betriebsparameterwerte und/oder die Referenzwerte indirekt in Abhängigkeit der Zeit ermittelt werden/worden sein, beispielsweise in Abhängigkeit einer Laufleistung, welche wiederum von der Zeit abhängig ist.

Weiter können die Betriebsparameterwerte und/oder die Referenzwerte direkt über die Zeit kumuliert werden. Ferner können die Betriebsparameterwerte und/oder die Referenzwerte indirekt über die Zeit, beispielsweise über die Laufleistung, kumuliert werden.

Vorzugsweise wird die Vergleichsgröße unter Verwendung eines statistischen Tests, insbesondere eines sogenannten Kolmogorow-Smirnow-Tests, bestimmt.

Ferner, insbesondere alternativ, kann die Vergleichsgröße eine maximale euklidische Abweichung zwischen dem Signal der zu untersuchenden Komponente und dem Referenzsignal sein.

In einem nicht-beanspruchten Beispiel werden zur Bestimmung der maximalen euklidischen Abweichung die Betriebsparameterwerte mit den Referenzwerten verglichen. Die maximale euklidische Abweichung ist vorzugsweise die maximale Abweichung zwischen einem Betriebsparameterwert zu einem beliebigen Zeitpunkt und einem Referenzwert zu demselben Zeitpunkt.

Außerdem kann die Vergleichsgröße unter Verwendung der Zeit, eines oder mehrerer der Referenzwerte, einer Konstante und/oder eines anderen Werts normiert werden.

Das Referenzsignal, insbesondere die Referenzwerte, können simuliert sein. Ferner kann das Referenzsignal, insbesondere können die Referenzwerte, über eine angenommene Wahrscheinlichkeitsdichtefunktion geschätzt sein.

In einer bevorzugten Ausgestaltung der Erfindung wird das Referenzsignal empirisch bestimmt. Das heißt, es ist bevorzugt, wenn die Referenzwerte empirisch bestimmt werden.

Das Signal der zu untersuchenden Komponente beschreibt zweckmäßigerweise das Funktionsverhalten der Komponente innerhalb eines vorgegebenen Zeitabschnitts. Weiter beschreibt das Referenzsignal vorzugsweise ein durchschnittliches Funktionsverhalten gleichartiger Komponenten innerhalb desselben Zeitabschnitts.

Auf diese Weise können externe, insbesondere zeitabhängige, Einflüsse, z.B. Umwelteinflüsse, gleichermaßen für das Signal der zu untersuchenden Komponente sowie für das Referenzsignal berücksichtigt werden. Mit anderen Worten kann auf diese Weise eine Normierung der externen Einflüsse vorgenommen werden.

Prinzipiell kann das Referenzsignal auch ein durchschnittliches Funktionsverhalten gleichartiger Komponenten innerhalb eines anderen Zeitabschnitts, beispielsweise innerhalb eines vorhergehenden Zeitabschnitts, beschreiben.

Als gleichartige Komponenten können Komponenten aufgefasst werden, welche gleichartig zu der zu untersuchenden Komponente sind. Vorzugsweise beschreibt das Referenzsignal ein durchschnittliches Funktionsverhalten mehrerer Komponenten, welche gleichartig zu der zu untersuchenden Komponente sind.

Weiter ist es zweckmäßig, wenn das Referenzsignal eine Mittelung aus mehreren Signalen mehrerer gleichartiger Komponenten derselben technischen Anlage ist.

Die mehreren Signale der mehreren gleichartigen Komponenten können jeweils mehrere Signalwerte aufweisen. Insbesondere kann ein jeweiliger Referenzwert eine Mittelung mehrerer Signalwerte (insbesondere der mehreren Signale) zu einem bestimmten Zeitpunkt sein. Insbesondere kann ein jeweiliger Referenzwert ein Mittelwert, beispielsweise ein arithmetischer Mittelwert, ein Median oder ein Modalwert, der mehreren Signalwerte zu dem bestimmten Zeitpunkt sein. Das heißt, dass bei der Mittelung der Mittelwert der mehreren Signalwerte insbesondere zu einem bestimmten Zeitpunkt, berechnet wird. Ferner kann ein jeweiliger Referenzwert unter Verwendung eines (anderen) Lageparameters, z.B. unter Verwendung eines Quantils der mehreren Signalwerte, zu dem bestimmten Zeitpunkt ermittelt werden.

Bei der Mittelung der mehreren Signale der mehreren gleichartigen Komponenten kann eine Wichtung der Signale vorgenommen werden.

Wenn das Referenzsignal eine Mittelung aus den mehreren Signalen der mehreren gleichartigen Komponenten derselben technischen Anlage ist, können externe, insbesondere anlagenabhängige, Einflüsse, z.B. Einflüsse einer Laufleistung der Anlage, Einflüsse einer von der Anlage umgesetzten Leistung o. Ä., gleichermaßen für das Signal der zu untersuchenden Komponente sowie für das Referenzsignal berücksichtigt werden. Mit anderen Worten kann auf diese Weise eine Normierung der externen Einflüsse vorgenommen werden. Auf eine Modellierung äußerer Einflüsse kann auf diese Weise verzichtet werden.

Prinzipiell kann das Referenzsignal auch eine Mittelung aus mehreren Signalen mehrerer gleichartiger Komponenten zumindest einer anderen technischen Anlage sein.

Eine gleichartige Komponente kann eine andere Komponente desselben Komponententyps, insbesondere derselben technischen Anlage, sein. Vorzugsweise sind Komponenten desselben Komponententyps baugleich.

Weiter kann eine gleichartige Komponente eine gleichartig reagierende Komponente eines anderen Komponententyps, insbesondere derselben technischen Anlage, sein. Als gleichartig reagierend kann gleichartig auf äußere Einflüsse reagierend aufgefasst werden. Zweckmäßigerweise reagiert die gleichartig reagierende Komponente analog bzw. gleichartig wie die zu untersuchende Komponente auf äußere Einflüsse. Insbesondere kann die gleichartig reagierende Komponente gleichartig wie die zu untersuchende Komponente auf eine Laufleistung der Anlage, auf eine von der Anlage umgesetzten Leistung, auf Umwelteinflüsse (wie z.B. eine Umgebungstemperatur) usw. reagieren.

Zweckmäßigerweise wird ein Grenzwert für die Auftretenswahrscheinlichkeit der Vergleichsgröße, kurz: für die Auftretenswahrscheinlichkeit, vorgegeben. Der Grenzwert kann angeben, ab welcher Auftretenswahrscheinlichkeit ein Verhalten der zu untersuchenden Komponente als normales gilt bzw. als normal erkannt werden soll. Der Grenzwert kann beispielsweise 5% (d.h. 0,05), 1% (d.h. 0,01), 0,5% (d.h. 0,005) oder 0,1% (d.h. 0,001) sein.

Falls die Auftretenswahrscheinlichkeit der Vergleichsgröße größer ist als der vorgegebene Grenzwert, wird vorzugsweise ein normales Verhalten der zu untersuchenden Komponente erkannt. Ein normales Verhalten kann ein erwartetes Verhalten sein.

Das heißt, dass in der (vorgebbaren) Verteilung der Vielzahl solcher Vergleichsgrößen, insbesondere unter Verwendung des Grenzwerts, ein Bereich für erwartetes Verhalten bzw. für normales Verhalten vorgegeben werden/sein kann, in welchem zweckmäßigerweise ein normales Verhalten der zu untersuchenden Komponente erkannt wird.

Falls die Auftretenswahrscheinlichkeit der Vergleichsgröße kleiner ist als der vorgegebene Grenzwert, wird vorzugsweise ein anormales Verhalten der zu untersuchenden Komponente erkannt. Ein anormales Verhalten kann ein nicht erwartetes Verhalten sein. Eine sich anormal verhaltende Komponente kann beispielsweise nicht voll funktionsfähig sein und/oder als nicht voll funktionsfähig gelten.

Die Auftretenswahrscheinlichkeit der Vergleichsgröße wird unter Verwendung einer vorgebbaren Verteilung einer Vielzahl solcher Vergleichsgrößen ermittelt.

Vorzugsweise liegt die Vielzahl solcher Vergleichsgrößen vor. Beispielsweise kann die Verteilung der Vielzahl solcher Vergleichsgrößen vorgegeben sein. Weiter kann die vorgebbare Verteilung der Vielzahl solcher Vergleichsgrößen anhand der Vielzahl solcher Vergleichsgrößen ermittelt werden.

Weiter kann die Vielzahl solcher Vergleichsgrößen ermittelt werden.

Insbesondere wird die Vielzahl solcher Vergleichsgrößen ermittelt, indem beispielsweise für mehrere Komponenten und/oder für mehrere Zeitabschnitte eine jeweilige Vergleichsgröße in analoger Weise wie zuvor beschrieben ermittelt wird/werden. Anhand der ermittelten Vergleichsgrößen kann die Verteilung (der Vielzahl solcher Vergleichsgrößen) ermittelt werden.

Zweckmäßigerweise ist die Auftretenswahrscheinlichkeit abhängig von der vorgegebenen Verteilung der Vielzahl solcher Vergleichsgrößen. Auf diese Weise ist die Auftretenswahrscheinlichkeit abhängig von der Vielzahl solcher Vergleichsgrößen. Je mehr solcher Vergleichsgrößen bestimmt werden bzw. wurden, desto stabiler ist zweckmäßigerweise das Verfahren. Außerdem kann die Vielzahl solcher Vergleichsgrößen (zumindest teilweise) aktualisiert werden. Insbesondere können bei der Aktualisierung weitere solcher Vergleichsgrößen in die Menge der Vielzahl solcher Vergleichsgrößen aufgenommen werden. Aufgrund der Aktualisierung der Vielzahl solcher Vergleichsgrößen kann die Verteilung der Vielzahl solcher Vergleichsgrößen aktualisiert werden. Auf diese Weise kann das Verfahren selbstlernend sein.

Zweckmäßigerweise wird die vorgegebene Verteilung der Vielzahl solcher Vergleichsgrößen ermittelt, indem vorzugsweise für mehrere Zeitabschnitte ein das Funktionsverhalten zumindest einer gleichartigen Komponente repräsentierendes Signal des jeweiligen Zeitabschnitts mit einem jeweiligen Referenzsignal, welches vorzugsweise ein durchschnittliches Funktionsverhalten gleichartiger Komponenten innerhalb desselben jeweiligen Zeitabschnitts beschreibt, verglichen wird. Beispielsweise kann für mehrere Zeitabschnitte ein das Funktionsverhalten der zu untersuchenden Komponente repräsentierendes Signal des jeweiligen Zeitabschnitts mit einem jeweiligen Referenzsignal, welches vorzugsweise ein durchschnittliches Funktionsverhalten gleichartiger Komponenten innerhalb desselben jeweiligen Zeitabschnitts beschreibt, verglichen werden.

Bei dem jeweiligen Vergleich, insbesondere zur Ermittlung der Verteilung der Vielzahl solcher Vergleichsgrößen, wird vorzugsweise jeweils eine die Abweichung des Signals vom Referenzsignal beschreibende Vergleichsgröße ermittelt. Anhand der mehreren Vergleichsgrößen kann die Verteilung der Vielzahl solcher Vergleichsgrößen ermittelt werden.

Weiter ist es zweckmäßig, wenn die vorgegebene Verteilung der Vielzahl solcher Vergleichsgrößen ermittelt wird, indem für mehrere Komponenten desselben Komponententyps, insbesondere derselben technischen Anlage und/oder zumindest einer anderen technischen Anlage desselben Anlagentyps, ein das Funktionsverhalten der jeweiligen Komponente repräsentierendes Signal der jeweiligen Komponente mit einem Referenzsignal, welches zweckmäßigerweise ein durchschnittliches Funktionsverhalten gleichartiger Komponenten, insbesondere der jeweiligen Anlage, beschreibt, verglichen wird. Bei dem jeweiligen Vergleich, insbesondere zur Ermittlung der Verteilung der Vielzahl solcher Vergleichsgrößen, wird vorzugsweise jeweils eine die Abweichung des Signals vom Referenzsignal beschreibende Vergleichsgröße ermittelt. Anhand der mehreren Vergleichsgrößen kann die Verteilung der Vielzahl solcher Vergleichsgrößen ermittelt werden.

Ferner ist die Erfindung gerichtet auf ein Computerprogramm mit Befehlen, welche, wenn das Computerprogramm auf einem Computer ausgeführt wird, diesen veranlasst, das zuvor genannte Verfahren und/oder eine seiner Weiterbildungen auszuführen.

Weiter ist die Erfindung gerichtet auf ein computerlesbares Speichermedium mit Befehlen, welche, wenn sie durch einen Computer ausgeführt werden, diesen Computer veranlassen, das zuvor genannte Verfahren und/oder eine seiner Weiterbildungen auszuführen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, dem erfindungsgemäßen Computerprogramm und dem computerlesbaren Speichermedium kombinierbar. So sind Verfahrensmerkmale auch als Eigenschaften des entsprechenden Computerprogramms und/oder des entsprechenden computerlesbaren Speichermediums gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Das Ausführungsbeispiel dient der Erläuterung der Erfindung und beschränkt die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

FIG 1    ein erstes Diagramm mit einem das Funktionsverhalten der Komponente repräsentierenden Signal einer zu untersuchenden Komponente und mit einem Referenzsignal, welches ein durchschnittliches Funktionsverhalten gleichartiger Komponenten beschreibt,

FIG 2    ein zweites Diagramm zur Ermittlung einer Vergleichsgröße, welche die Abweichung des Signals der zu untersuchenden Komponente aus FIG 1 vom Referenzsignal aus FIG 1 beschreibt, und

FIG 3    ein drittes Diagramm zur Ermittlung einer Auftretenswahrscheinlichkeit der Vergleichsgröße aus FIG 2 unter Verwendung einer vorgegebenen Verteilung einer Vielzahl solcher Verteilungsgrößen.

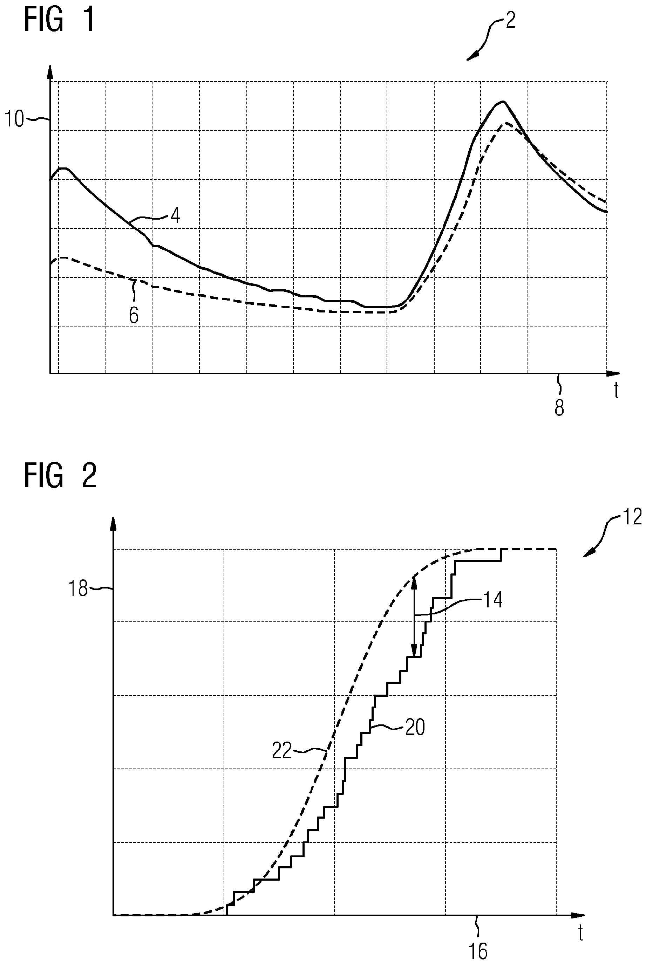

FIG 1 zeigt ein Diagramm 2 mit einem das Funktionsverhalten der Komponente repräsentierenden Signal 4 einer zu untersuchenden Komponente. Weiter umfasst das Diagramm einem Referenzsignal 6, welches ein durchschnittliches Funktionsverhalten gleichartiger Komponenten beschreibt.

Auf der x-Achse 8 des Diagramms 2 ist die Zeit t aufgetragen. Auf der y-Achse 10 des Diagramms 2 ist ein Betriebsparameter aufgetragen.

In diesem Beispiel ist die zu untersuchende Komponente ein Radsatzlager eines Schienenfahrzeugs. Die gleichartigen Komponenten sind andere Radsatzlager desselben Schienenfahrzeugs, insbesondere alle anderen Radsatzlager desselben Schienenfahrzeugs. Jedes Radsatzlager umfasst einen Sensor, welcher jeweils Werte eines Betriebsparameters ermittelt. Der Betriebsparameter ist sensitiv auf Schäden des Radsatzlagers.

In diesem Beispiel ist der Betriebsparameter eine Temperatur der jeweiligen Komponente, hier des jeweiligen Radsatzlagers.

Die Sensoren ermitteln (quasi-)kontinuierlich Werte für den Betriebsparameter, kurz Betriebsparameterwerte, in diesem Beispiel mit einer Frequenz von $f = 1\ min^{-1}$.

Jedes Radsatzlager kann auch mehrere Sensoren umfassen, deren Signale dann zu einem Signal der jeweiligen Komponente gemittelt werden/sind. Weiter können die Betriebsparameterwerte geglättet werden/sein.

Jedes Signal umfasst für jedes Radsatzlager $R_i$ mit $i$ = 1, 2, ...$N$ Betriebsparameterwerte $x_{R_i}(t)$ in Abhängigkeit der Zeit t.

In diesem Beispiel ist die Komponente $R_1$ (d.h. $i$ = 1) die zu untersuchende Komponente. Das Signal 4 der zu untersuchenden Komponente umfasst die Betriebsparameter $x_{R_i}$ mit $i$ = 1.

Das Referenzsignal 6 wird berechnet, indem der erwartete Verlauf $\hat{x}_{R_i}(t)$ aller anderen Radsatzlager $R_j$ mit $j \neq i$ berechnet wird. Dazu wird ein Mittelwert, hier ein arithmetisches Mittel, der Betriebsparameter $x_{R_j}$ der Radsatzlager $R_j$ mit $j \neq i$ ermittelt:

$$\hat{x}_{R_i}(t) = avg(x_{R_i}(t)) \quad \mathtt{mit}\ j \neq i, \ \mathtt{hier}\ j = 2 \dots N$$

Prinzipiell könnte der Mittelwert auch ein Median, ein Modalwert oder eine Quantil sein.

Prinzipiell ist es möglich, dass statistische und/oder systematische Schwankungen zumindest eines Signals unter Verwendung eines Korrekturfaktors für das schwankende Signal berücksichtigt werden. Einer besseren Übersichtlichkeit halber wurden hier keine Korrekturfaktoren eingeführt.

FIG 1 zeigt beispielhaft als Signal 4 der zu untersuchenden Komponente den zeitlichen Verlauf der Temperatur des zu untersuchenden Radsatzlagers ($R_i$ mit $i$ = 1) innerhalb eines vorgegebenen Zeitabschnitts als durchgezogene Linie. Weiter zeigt FIG 1 als Referenzsignal 6 den zeitlichen Verlauf der Temperatur aller anderen Radsatzlager ($R_j$ mit $j$ = 2...$N$) an demselben Schienenfahrzeug innerhalb desselben Zeitabschnitts als gestrichelte Linie.

Das Signal 4 der zu untersuchenden Komponente wird mit dem Referenzsignal 6 verglichen.

Bei dem Vergleich wird eine die Abweichung des Signals 4 vom Referenzsignal 6 beschreibende Vergleichsgröße 14 ermittelt.

FIG 2 zeigt ein Diagramm 12 zur Ermittlung der Vergleichsgröße 14, welche Vergleichsgröße 14 die Abweichung eines Signals 4 der zu untersuchenden Komponente von einem Referenzsignal 6 beschreibt. Das Signal 4 der zu untersuchenden Komponente und das Referenzsignal 6 sind ähnlich zu den in FIG 1 gezeigten Signalen 4 und 6. Zu den Merkmalen des Signals 4 der zu untersuchenden Komponente und des Referenzsignals 6 wird hiermit auf FIG 1 verwiesen.

FIG 2 erläutert nur beispielhaft die Berechnung der Vergleichsgröße 14. FIG 2 zeigt insbesondere nicht die Berechnung der Vergleichsgröße zu den in FIG 1 dargestellten Betriebsparameterwerten $x_{R_i}(t)$ des Signals 4 der zu untersuchenden Komponente und den in FIG 1 dargestellten Referenzwerten $\hat{x}_{R_i}(t)$ des Referenzsignals 6.

In FIG 2 ist auf der x-Achse 16 des Diagramms 12 die Zeit t aufgetragen. Auf der y-Achse 18 des Diagramms 12 ist der kumulierte Betriebsparameter aufgetragen. In diesem Beispiel ist auf der y-Achse 18 des Diagramms 12 die kumulierte Temperatur aufgetragen.

Zur Ermittlung der Vergleichsgröße 14 werden die Betriebsparameterwerte $x_{R_i}(t)$ über die Zeit kumuliert. Die kumulierten Betriebsparameterwerte $X_{R_i}$ sind im Diagramm als durchgezogene Linie 20 dargestellt.

Außerdem werden die Referenzwerte $\hat{x}_{R_i}(t)$ über die Zeit kumuliert. Die kumulierten Referenzwerte $\hat{X}_{R_i}$ sind im Diagramm 12 als gestrichelte Linie 22 dargestellt.

Als Vergleichsgröße wird eine maximale kumulative Abweichung $d_i$, auch maximale kumulative Distanz $d_i$, zwischen den kumulierten Betriebswerten $X_{R_i}$ und den kumulierten Referenzwerten $\hat{X}_{R_i}$ ermittelt. Die maximale kumulative Abweichung $d_i$ wird unter Verwendung einer sogenannten Kolmogorow-Smirnow-Teststatistik ermittelt. Die maximale kumulative Abweichung $d_i$ wird dabei auf die Anzahl der Messwerte N in dem jeweiligen Zeitabschnitt normiert, wobei hier beispielsweise $N = min(N_V, \hat{N}_V)$ gilt. Die Vergleichsgröße 14, hier die maximale kumulative Abweichung $d_i$, wird wie folgt berechnet:

$$d_i := d_i\left(x_{R_i}, \hat{x}_{R_i}\right) = \frac{\sup \left| X_{R_i}(t) - \hat{X}_{R_i}(t) \right|}{N}$$

Die Vergleichsgröße 14, hier die maximale kumulative Abweichung $d_i$, ist in FIG 2 durch einen Pfeil 14 dargestellt.

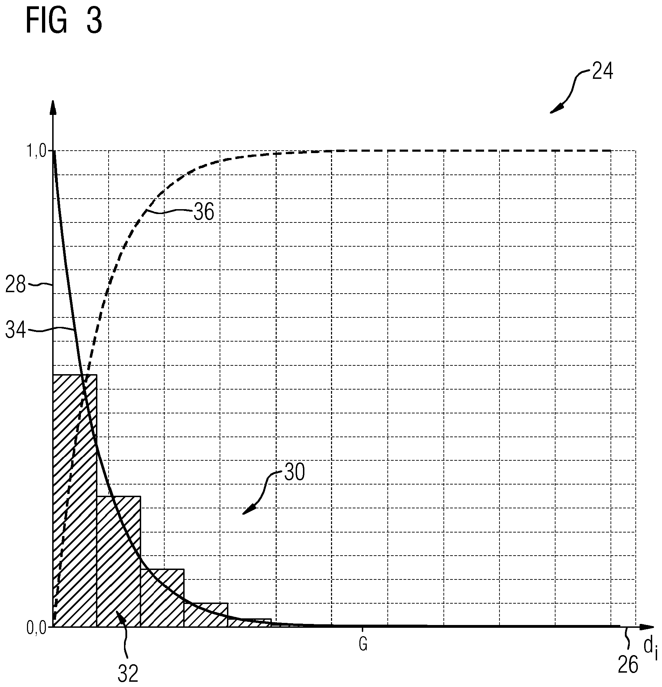

FIG 3 zeigt ein Diagramm 24 zur Ermittlung einer Auftretenswahrscheinlichkeit der Vergleichsgröße aus FIG 2. Das Diagramm 24 umfasst eine vorgegebene Verteilung 30 einer Vielzahl solcher Vergleichsgrößen.

Auf der x-Achse 26 des Diagramms 24 ist die Vergleichsgröße 14, hier die maximale kumulative Abweichung $d_i$, aufgetragen. Auf der y-Achse 28 des Diagramms 24 ist eine Häufigkeit aufgetragen.

Das unter FIG 2 und 3 beschriebene Verfahren wurde bereits für mehrere Komponenten als zu untersuchende Komponente, jeweils für mehrere Schienenfahrzeuge und jeweils für mehrere Zeitabschnitte durchgeführt. Dabei wurde eine Vielzahl solcher Vergleichsgrößen ermittelt. Anhand der ermittelten solchen Vergleichsgrößen wird die Verteilung 30 der Vielzahl solcher Vergleichsgrößen ermittelt.

Die Verteilung 30 der Vielzahl solcher Verteilungsgrößen wird ermittelt, indem die Häufigkeiten der ermittelten solchen Verteilungsgrößen bestimmt werden. Auf diese Weise kann eine empirische Häufigkeitsverteilung ermittelt werden. Die empirische Häufigkeitsverteilung ist in dem Diagramm 24 in FIG 3 als Histogramm 32 dargestellt.

Weiter wird in diesem Beispiel zur Ermittlung der Verteilung 30 der Vielzahl solcher Vergleichsgrößen eine Verteilungsfunktion eines vorgegebenen Verteilungstyps als parametrisierte Verteilungsfunktion vorgegeben. Die Verteilungsfunktion kann eine Verteilungsdichtefunktion oder eine kumulative Verteilungsfunktion sein. In diesem Beispiel wird beispielsweise eine Verteilungsdichtefunktion vorgegeben. Beispielsweise kann der vorgegebene Verteilungstyp eine logarithmische Normalverteilung oder eine Exponentialfunktion sein. Die Parameter der parametrisierten Verteilungsfunktion werden (unter Verwendung bekannter Methoden) gefittet, sodass eine angepasste Verteilungsfunktion ermittelt wird. Die angepasste Verteilungsfunktion ist in dem Diagramm 24 in FIG 3 als durchgezogene Linie 34 dargestellt.

Aus der angepassten Verteilungsfunktion wird die kumulative Verteilungsfunktion berechnet. Die kumulative Verteilungsfunktion ist in dem Diagramm 24 in FIG 3 als gestrichelte Linie 36 dargestellt.

Eine Auftretenswahrscheinlichkeit der Vergleichsgröße $d_i$ mit $i = 1$, kurz $d_1$, für die zu untersuchende Komponente $R_1$ wird unter Verwendung der vorgegebenen Verteilung 30 der Vielzahl solcher Vergleichsgrößen ermittelt.

Die Auftretenswahrscheinlichkeit ist dann direkt ein Maß dafür, wie auffällig der beobachtete Temperaturverlauf am zu untersuchenden Radsatzlager $R_i$, hier $R_1$, ist.

Für die Auftretenswahrscheinlichkeit wird ein Grenzwert G vorgegeben. Insbesondere wird der Grenzwert G vor der Berechnung der Auftretenswahrscheinlichkeit vorgegeben. Der Grenzwert G kann beispielsweise bei 1% (0,01), bei 0,5% (0,005) oder bei 0,1% (0,001) liegen.

Falls die Auftretenswahrscheinlichkeit der Vergleichsgröße $d_1$ größer ist als der vorgegebene Grenzwert G, wird ein normales Verhalten der zu untersuchenden Komponente erkannt.

Falls die Auftretenswahrscheinlichkeit der Vergleichsgröße $d_1$ kleiner ist als der vorgegebene Grenzwert G, wird ein anormales Verhalten der zu untersuchenden Komponente erkannt.

Unterschreitet die Auftretenswahrscheinlichkeit der Vergleichsgröße $d_1$ beispielsweise den Grenzwert $G$, hier z.B. 0,005, wird ein Alarm erzeugt, der z.B. an ein Instandhaltungsplanungs- und/oder -steuerungssystem weitergeleitet werden kann. Ferner kann ein Alarm erzeugt werden, wenn die Auftretenswahrscheinlichkeit der Vergleichsgröße $d_1$ den Grenzwert G mehrmals mit einer bestimmten Anzahl innerhalb eines vorgegebenen Zeitintervalls unterschreitet.


**Patentansprüche**

1. Verfahren zur Untersuchung eines Funktionsverhaltens einer Komponente einer technischen Anlage

   bei dem
   ein das Funktionsverhalten der Komponente repräsentierendes Signal (4) der zu untersuchenden Komponente mit einem Referenzsignal (6), welches ein durchschnittliches Funktionsverhalten gleichartiger Komponenten beschreibt, verglichen wird, wobei bei dem Vergleich
   eine die Abweichung des Signals (4) vom Referenzsignal (6) beschreibende Vergleichsgröße (14) ermittelt wird und
   eine Auftretenswahrscheinlichkeit der Vergleichsgröße (14) unter Verwendung einer vorgebbaren Verteilung (30) einer Vielzahl solcher Vergleichsgrößen (14) ermittelt wird, **dadurch gekennzeichnet, dass**
   die Vergleichsgröße (14) eine maximale kumulierte Abweichung ($d_i$) zwischen dem Signal (4) der zu untersuchenden Komponente und dem Referenzsignal (6) ist.

2. Verfahren nach Anspruch 1,

   **dadurch gekennzeichnet, dass**
   das Signal (4) der zu untersuchenden Komponente mehrere Betriebsparameterwerte ($x_{R_i}$) in Abhängigkeit von der Zeit (t) umfasst und das Referenzsignal (6) mehrere Referenzwerte ($\hat{x}_{R_i}$) in Abhängigkeit von der Zeit (t) umfasst,
   die Betriebsparameterwerte ($x_{R_i}$) über die Zeit (t) kumuliert werden, die Referenzwerte ($\hat{x}_{R_i}$) über die Zeit (t) kumuliert werden und
   als Vergleichsgröße (14) eine maximale kumulative Abweichung ($d_i$) zwischen den kumulierten Betriebswerten $X_{R_i}$ und den kumulierten Referenzwerten ($\hat{X}_{R_i}$) ermittelt wird.

3. Verfahren nach einem der vorhergehenden Ansprüche,
   **dadurch gekennzeichnet, dass**
   die Vergleichsgröße (14) unter Verwendung eines statistischen Tests, insbesondere eines sogenannten Kolmogorow-Smirnow-Tests, bestimmt wird.

**4.** Verfahren nach einem der vorhergehenden Ansprüche,

**dadurch gekennzeichnet, dass**
das Signal (4) der zu untersuchenden Komponente das Funktionsverhalten der Komponente innerhalb eines vorgegebenen Zeitabschnitts beschreibt und
das Referenzsignal (6) ein durchschnittliches Funktionsverhalten gleichartiger Komponenten innerhalb desselben Zeitabschnitts beschreibt.

**5.** Verfahren nach einem der vorhergehenden Ansprüche,
**dadurch gekennzeichnet, dass**
das Referenzsignal (6) eine Mittelung aus mehreren Signalen mehrerer gleichartiger Komponenten derselben technischen Anlage ist.

**6.** Verfahren nach einem der vorhergehenden Ansprüche,
**dadurch gekennzeichnet, dass**
eine gleichartige Komponente eine andere Komponente desselben Komponententyps, insbesondere derselben technischen Anlage, ist.

**7.** Verfahren nach einem der vorhergehenden Ansprüche,
**dadurch gekennzeichnet, dass**
eine gleichartige Komponente eine, insbesondere auf externe Einflüsse, gleichartig reagierende Komponente eines anderen Komponententyps, insbesondere derselben technischen Anlage, ist.

**8.** Verfahren nach einem der vorhergehenden Ansprüche,
**dadurch gekennzeichnet, dass**
falls die Auftretenswahrscheinlichkeit der Vergleichsgröße (14) kleiner ist als ein vorgegebener Grenzwert (G), ein anormales Verhalten der zu untersuchenden Komponente erkannt wird.

**9.** Verfahren nach einem der vorhergehenden Ansprüche,

**dadurch gekennzeichnet, dass**
die Verteilung (30) der Vielzahl solcher Vergleichsgrößen (14) ermittelt wird, indem
für mehrere Zeitabschnitte
ein das Funktionsverhalten zumindest einer gleichartigen Komponente repräsentierendes Signal (4) des jeweiligen Zeitabschnitts mit einem jeweiligen Referenzsignal (6), welches ein durchschnittliches Funktionsverhalten gleichartiger Komponenten innerhalb desselben jeweiligen Zeitabschnitts beschreibt, verglichen wird,
wobei bei dem jeweiligen Vergleich
jeweils eine die Abweichung des Signals (4) vom Referenzsignal (6) beschreibende Vergleichsgröße (14) ermittelt wird und anhand der mehreren Vergleichsgrößen (14) die Verteilung (30) der Vielzahl solcher Vergleichsgrößen (14) ermittelt wird.

**10.** Verfahren nach einem der vorhergehenden Ansprüche,

**dadurch gekennzeichnet, dass**
die Verteilung (30) der Vielzahl solcher Vergleichsgrößen (14) ermittelt wird, indem
für mehrere Komponenten desselben Komponententyps ein das Funktionsverhalten der jeweiligen Komponente repräsentierendes Signal (4) der jeweiligen Komponente mit einem Referenzsignal (6), welches ein durchschnittliches Funktionsverhalten gleichartiger Komponenten beschreibt, verglichen wird,
wobei bei dem jeweiligen Vergleich
jeweils eine die Abweichung des Signals (4) vom Referenzsignal (6) beschreibende Vergleichsgröße (14) ermittelt wird und anhand der mehreren Vergleichsgrößen (14) die Verteilung (30) der Vielzahl solcher Vergleichsgrößen (14) ermittelt wird.

**11.** Computerprogramm mit Befehlen, welche, wenn das Computerprogramm auf einem Computer ausgeführt wird, diesen veranlasst, das Verfahren nach einem der Ansprüche 1 bis 10 auszuführen.

**12.** Computerlesbares Speichermedium mit Befehlen, welche, wenn sie durch einen Computer ausgeführt werden, diesen Computer veranlassen, das Verfahren nach einem der Ansprüche 1 bis 10 auszuführen.

**Claims**

1. Method for investigating a functional behaviour of a component of a technical installation

   in which
   a signal (4) of the component to be investigated and representing the functional behaviour of the component is compared with a reference signal (6) which describes an average functional behaviour of identical components, wherein in the comparison
   a comparison variable (14) describing the deviation of the signal (4) from the reference signal (6) is determined and
   a probability of occurrence of the comparison variable (14) is determined using a definable distribution (30) of a multiplicity of such comparison variables (14),
   **characterized in that**
   the comparison variable (14) is a maximum cumulative deviation ($d_i$) between the signal (4) of the component to be investigated and the reference signal (6).

2. Method according to Claim 1,

   **characterized in that**
   the signal (4) of the component to be investigated comprises a plurality of operating parameter values ($X_{Ri}$) as a function of time (t) and the reference signal (6) comprises a plurality of reference values ($\hat{X}_{Ri}$) as a function of time (t),
   the operating parameter values ($X_{Ri}$) are accumulated over time (t), the reference values ($\hat{X}_{Ri}$) are accumulated over time (t) and
   a maximum cumulative deviation ($d_i$) between the accumulated operating values $X_{Ri}$ and the accumulated reference values ($\hat{X}_{Ri}$) is determined as the comparison variable (14).

3. Method according to any one of the preceding claims, **characterized in that**
   the comparison variable (14) is determined using a statistical test, in particular a so-called Kolmogorov-Smirnov test.

4. Method according to any one of the preceding claims, **characterized in that**

   the signal (4) of the component to be investigated describes the functional behaviour of the component within a specified time interval and
   the reference signal (6) describes an average functional behaviour of identical components within the same time interval.

5. Method according to any one of the preceding claims, **characterized in that**
   the reference signal (6) is an average over a plurality of signals of a plurality of identical components of the same technical installation.

6. Method according to any one of the preceding claims, **characterized in that**
   an identical component is another component of the same component type, in particular of the same technical installation.

7. Method according to any one of the preceding claims,
   **characterized in that**
   an identical component is a component of another component type, in particular of the same technical installation, which responds in the same way, in particular to external influences.

8. Method according to any one of the preceding claims,
   **characterized in that**
   if the probability of occurrence of the comparison variable (14) is lower than a specified limit value (G), an abnormal behaviour of the component to be investigated is detected.

9. Method according to any one of the preceding claims,

   **characterized in that**

the distribution (30) of the multiplicity of such comparison variables (14) is determined by,
for multiple time intervals,
a signal (4) of the respective time interval representing the functional behaviour of at least one identical component being compared with a respective reference signal (6) which describes an average functional behaviour of identical components within the same respective time interval,
wherein in each comparison
a comparison variable (14) describing the deviation of the signal (4) from the reference signal (6) is determined in each case, and on the basis of the multiple comparison variables (14) the distribution (30) of the multiplicity of such comparison variables (14) is determined.

10. Method according to any one of the preceding claims,

**characterized in that**
the distribution (30) of the multiplicity of such comparison variables (14) is determined by,
for multiple components of the same component type,
a signal (4) of the respective component representing the functional behaviour of the respective component being compared with a reference signal (6) which describes an average functional behaviour of identical components,
wherein in each comparison
a comparison variable (14) describing the deviation of the signal (4) from the reference signal (6) is determined in each case, and on the basis of the multiple comparison variables (14) the distribution (30) of the multiplicity of such comparison variables (14) is determined.

11. Computer program having commands which, when the computer program is executed on a computer, causes the same to execute the method according to any one of Claims 1 to 10.

12. Computer-readable storage medium having commands which, when they are executed by a computer, cause said computer to execute the method according to any one of Claims 1 to 10.

**Revendications**

1. Procédé d'étude du comportement fonctionnel d'un composant d'une installation technique,

dans lequel
on compare un signal (4), représentant le comportement fonctionnel du composant, du composant à étudier à un signal (6) de référence, qui décrit un comportement fonctionnel moyen de composants de même type,
dans lequel lors de la comparaison,
on détermine une grandeur (14) de comparaison décrivant l'écart du signal (4) au signal (6) de référence et on détermine une probabilité d'apparition de la grandeur (14) de comparaison, en utilisant une distribution (30) pouvant être donnée à l'avance d'une pluralité de grandeurs (14) de comparaison de ce type, **caractérisé en ce que**
la grandeur (14) de comparaison est un écart ($d_i$) cumulé maximum entre le signal (4) du composant à étudier et le signal (6) de référence.

2. Procédé suivant la revendication 1,

**caractérisé en ce que**
le signal (4) du composant à étudier comprend plusieurs valeurs ($x_{Ri}$) de paramètre de fonctionnement en fonction du temps (t) et le signal (6) de référence comprend plusieurs valeurs ($\hat{x}_{Ri}$) de référence en fonction du temps (t),
on cumule les valeurs ($x_{Ri}$) de paramètre de fonctionnement sur le temps (t), on cumule les valeurs ($\hat{x}_{Ri}$) de référence sur le temps (t) et
on détermine comme grandeur (14) de comparaison un écart ($d_i$) cumulatif maximum entre les valeurs ($X_{Ri}$) de fonctionnement cumulées et les valeurs ($\hat{X}_{Ri}$) de référence cumulées.

3. Procédé suivant l'une des revendications précédentes,
**caractérisé en ce que**

on détermine la grandeur (14) de comparaison en utilisant un test statistique, notamment ce que l'on appelle le test de Kolmogorov - Smirnov.

4. Procédé suivant l'une des revendications précédentes,

   **caractérisé en ce que**
   le signal (4) du composant à étudier décrit le comportement fonctionnel du composant dans un laps de temps donné à l'avance et
   le signal (6) de référence décrit un comportement fonctionnel moyen de composants du même type dans le même laps de temps.

5. Procédé suivant l'une des revendications précédentes,
   **caractérisé en ce que**
   le signal (6) de référence est une moyenne de plusieurs signaux de plusieurs composants de même type de la même installation technique.

6. Procédé suivant l'une des revendications précédentes,
   **caractérisé en ce qu'**
   un composant de même type est un autre composant du même type de composant, notamment de la même installation technique.

7. Procédé suivant l'une des revendications précédentes,
   **caractérisé en ce qu'**
   un composant du même type est un composant, réagissant de la même façon, notamment à des influences extérieures, d'un autre type de composant, notamment de la même installation technique.

8. Procédé suivant l'une des revendications précédentes,
   **caractérisé en ce que**
   si la probabilité d'apparition de la grandeur (14) de comparaison est plus petite qu'une valeur (G) limite donnée à l'avance, on détecte un comportement anormal du composant à étudier.

9. Procédé suivant l'une des revendications précédentes,

   **caractérisé en ce qu'**
   on détermine la distribution (30) de la pluralité de grandeurs (14) de comparaison de ce genre, en,
   pendant plusieurs laps de temps,
   comparant un signal (4), représentant le comportement fonctionnel d'au moins un composant de même type, du laps de temps respectif à un signal (6) de référence respectif, qui décrit un comportement fonctionnel moyen de composants de même type dans le même laps de temps respectif,
   dans lequel, lors de la comparaison respective,
   on détermine respectivement une grandeur (14) de comparaison, décrivant l'écart du signal (4) au signal (6) de référence, et, à l'aide des plusieurs grandeurs (14) de comparaison, on détermine la distribution (30) de la pluralité de grandeurs (14) de comparaison de ce genre.

10. Procédé suivant l'une des revendications précédentes,

    **caractérisé en ce que**
    l'on détermine la distribution (30) de la pluralité de grandeurs (14) de ce genre, en,
    pour plusieurs composants du même type de composants,
    comparant un signal (4), représentant le comportement fonctionnel du composant respectif, du composant respectif à un signal (6) de référence, qui décrit un comportement fonctionnel moyen de composants de même type,
    dans lequel, lors de la comparaison respective,
    on détermine respectivement une grandeur (14) de comparaison décrivant l'écart du signal (4) au signal (6) de référence, et
    à l'aide des plusieurs grandeurs (14) de comparaison,
    on détermine la distribution (30) de la pluralité de grandeurs (14) de comparaison de ce genre.

11. Programme d'ordinateur, comprenant des instructions, qui, lorsque le programme d'ordinateur est réalisé sur un ordinateur, font que celui-ci effectue le procédé suivant l'une des revendications 1 à 10.

12. Support de mémoire, déchiffrable par ordinateur, ayant des instructions, qui, lorsqu'elles sont réalisées par un ordinateur, font que cet ordinateur effectue le procédé suivant l'une des revendications 1 à 10.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19961631 A1
- DE 3734487 A1
- DE 19732046 A1
- EP 1542108 A1
- WO 2016191711 A1